# EUROPÄISCHE PATENTSCHRIFT

(11) **EP 0 933 016 B1**
(45) Veröffentlichungstag und Bekanntmachung des Hinweises auf die Patenterteilung: **16.04.2003**
(21) Anmeldenummer: 99101865.6
(22) Anmeldetag: 28.01.1999
(51) Int. Cl.: A01D 75/30, A01B 73/04

(54) **Tragvorrichtung und Grundstückspflegefahrzeug**
Support device and vehicle for ground maintenance
Dispositif de support et véhicule pour l'entretien du terrain

(30) Priorität: 30.01.1998 US 16085
(43) Veröffentlichungstag der Anmeldung: 04.08.1999
(73) Patentinhaber: DEERE & COMPANY, Moline, Illinois 61265-8098 (US)
(72) Erfinder: Anderson, Donald Theodore Michael, Oshkosh, Wisconsin 54904 (US); O'Toole, Frank Kenneth, West Bend, Wisconsin 53095 (US)
(74) Vertreter: Magin, Ludwig Bernhard

(56) Entgegenhaltungen:
- AU-A- 3 548 868
- US-A- 3 613 340
- US-A- 5 343 680
- US-A- 5 533 326
- US-A- 5 579 849

## Beschreibung

Die Erfindung betrifft eine Tragvorrichtung mit einem Tragarm, einer Halteeinrichtung und einer Gelenkverbindung, wobei der Tragarm einenends mit einem Fahrzeug und andernends über die Gelenkverbindung mit der Halteeinrichtung schwenkbar verbindbar ist, und mit zumindest einem ersten Anschlagelement zur Lagesicherung der Halteeinrichtung, wobei das Anschlagelement und die Halteeinrichtung durch eine Verstellung des Tragarms aneinander anlegbar sind und ein Grundstückspflegefahrzeug mit einer solchen Tragvorrichtung.

Tragvorrichtungen werden üblicherweise an Spindelmähgeräten zum Mähen von Rasengeländen wie Golfplätzen, die sehr genau gemäht werden müssen, verwendet. Diese Mähgeräte weisen eine an der Tragvorrichtung angebrachte Schneideinheit mit einer zylindrischen Mähspindel mit Klingen auf, die um eine sich seitwärts erstreckende Achse der Mähspindel rotieren.

Die US-PS-5,343,680 zeigt einen Spindelmäher mit mehreren Spindelmäherschneideinheiten. Jede Spindelmäherschneideinheit ist mit jeweils einer als Joch ausgeführten Tragvorrichtung über eine Gelenkverbindung an einem an dem Spindelmäher angebrachten Schubarm angebracht. Über zwei an der Tragvorrichtung vorgesehene Platten kann die Spindelmäherschneideinheit an dem Schubarm in einer Mähstellung und einer hochgeklappten Wartungsstellung gesichert werden, indem die Platten an der Gelenkverbindung in zwei unterschiedlichen Stellungen mittels in Öffnungen einsteckbarer Bolzen festgelegt werden können. In beiden Stellungen kann die Spindelmäherschneideinheit um die Gelenkverbindung verschwenken.

Die gattungsgemäße US-PS-3,613,340 zeigt einen Spindelmäher mit mehreren Mäheinheiten, welche über Schwenkarme mit dem Spindelmäher um eine sich in Längsrichtung des Spindelmähers erstreckende Aufhängung pendelnd verbunden sind. Mittels der Schwenkarme ist ein manuelles Anheben der Mäheinheiten möglich, welches durch an den Schwenkarmen vorgesehene Anschläge nach oben begrenzt wird, wobei ein Pendelnder Mäheinheiten um die Aufhängung in der angehobenen Stellung zumindest in einer Richtung möglich ist.

Das der Erfindung zugrunde liegende Problem wird in der nicht optimalen Funktion bekannter Tragvorrichtungen und der mit solchen Tragvorrichtungen ausgestatteten Grundstückspflegefahrzeuge gesehen.

Dieses Problem wird erfindungsgemäß durch die Lehre der Patentansprüche 1 und 9 gelöst, wobei in den weiteren Patentansprüchen die Lösung in vorteilhafter Weise weiterentwickelnde Merkmal aufgeführt sind.

Auf diese Weise kann eine Lagesicherung oder Stabilisierung der Halteeinrichtung erfolgen. Die Halteeinrichtung und das Anschlagelement sind durch eine Verstellung des Tragarms aneinander anlegbar, wobei die Bewegungsfreiheit der Halteeinrichtung durch die Anlage an dem Anschlagelement zumindest eingeschränkt wird. Die gelenkig an dem Tragarm angebrachte Halteeinrichtung kann durch das Anschlagelement an einem Ausschwenken in zumindest einer Richtung gehindert werden. Die Tragvorrichtung weist darüber hinaus ein zweites Anschlagelement auf und die Halteeinrichtung ist zwischen dem ersten und dem zweiten Anschlagelement angeordnet, so dass die Bewegungsfreiheit der Halteeinrichtung durch die Anschlagelemente weiter begrenzt wird. Die Anschlagelemente können derart angeordnet werden, daß sie in eine Lage bringbar sind, in der sie eine Bewegung oder ein Verschwenken der Halteeinrichtung vollständig unterbinden. Es ist denkbar, daß die Halteeinrichtung durch die Gelenkverbindung um eine horizontale, eine vertikale oder um eine beliebig ausgerichtete oder ausrichtbare Schwenkachse verschwenken kann. Es ist aber auch die Verwendung einer Gelenkverbindung mit mehreren Freiheitsgraden denkbar, was beispielsweise durch ein Kugelgelenk oder ein Kardangelenk realisiert werden kann. Auch die Verstellung des Tragarms kann sowohl in horizontaler oder in vertikaler Richtung als auch in einer kombinierten Bewegungsrichtung erfolgen. Das Fahrzeug kann ein Mähgerät, wie beispielsweise ein handgeführtes oder handgeschobenes Mähgerät, wie ein Rasenmäher oder ein Aufsitzmäher, oder ein Rasentraktor, oder auch eine Kehrmaschine oder ein Schneeräumgerät sein. Allgemein ausgedrückt handelt es sich vorzugsweise um ein Fahrzeug an dem mittels der an dem Tragarm verschwenkbar angeordneten Halteeinrichtung eine Arbeitseinheit anbringbar ist, die verschiedene Stellungen beispielsweise bezogen auf die Höhe über dem Boden oder auf das Fahrzeug, auf seine Mittelachse oder auf seine Fahrtrichtung o.ä. einnehmen bzw. in diese gebracht werden kann. Die Stabilisierung bzw. Festlegung der Halteeinrichtung ist sowohl in einer Arbeitsstellung wie auch einer AußerBetriebsstellung und dabei insbesondere in einer Transportstellung vorstellbar, bei der eine Bewegung der Halteeinrichtung unterbunden oder nur in vorgegebener Richtung ermöglicht sein soll. Dies kann dazu dienen, eine an der Halteeinrichtung angeschlossene Arbeitseinheit während des Transports daran zu hindern, mit dem Boden oder anderen Baugruppen des Fahrzeugs in Kontakt zu treten, um Beschädigungen der Arbeitseinheit, des Fahrzeugs und seiner Baugruppen oder des Bodens vorzubeugen. Die Tragvorrichtung kann aber auch verwendet werden, um die Halteeinrichtung in einer Arbeitsstellung zu sichern, beispielsweise um eine vorgegebene Schnitthöhe über dem Boden oder bezogen auf das Fahrzeug oder seinen Rahmen einzuhalten und um so ein gleichmäßiges Arbeitsergebnis zu erzielen.

Wird das erste Anschlagelement unterhalb der Halteeinrichtung angeordnet, so kann sich die Halteeinrichtung bedingt durch ihre Gewichtskraft bzw. bedingt durch die Gewichtskraft einer an ihr angebrachten Arbeitseinheit an dem Anschlagelement anlegen bzw. sich auf ihm abstützen, wodurch beispielsweise eine durch die Gewichtskraft bedingte Bewegung, wie beispielsweise ein Verschwenken nach unten, unterbunden werden kann.

Die Anschlagelemente können gegenüberliegend angeordnet sein. Eine bezogen auf die Halteeinrichtung seitlich versetzte Anordnung weist den Vorteil auf, daß die Halteeinrichtung durch die sich während des Verstellens des Tragarms annähernden Anschlagelemente leicht in eine gewünschte Stellung gebracht und in dieser Stellung sicher festgelegt werden kann.

Ist wenigstens eines der Anschlagelemente mit dem Tragarm mitteloder unmittelbar verbunden, so wird es bei einer Verstellung des Tragarms durch diesen bewegt und kann so an die Halteeinrichtung herangeführt und mit dieser in Anlage gebracht werden. Das Anschlagelement kann an dem Tragarm fest angebracht sein; es ist aber auch eine gelenkige oder verschiebbare Verbindung, die für bestimmte Aufgaben, beispielsweise zur Anpassung an verschiedene Arbeitseinheiten oder Arbeitshöhen o.ä., vorteilhaft sein kann, denkbar.

Ist zumindest eines der Anschlagelemente mit einem Rahmen des Fahrzeugs mittel- oder unmittelbar verbunden, so kann es einen bezogen auf das Fahrzeug lagefesten Anschlag bieten, der beispielsweise zur Stabilisierung der Halteeinrichtung in einer gewünschten Arbeits- oder Transporthöhe oder -stellung dienen kann. Es ist denkbar, dieses Anschlagelement dauerhaft an dem Rahmen des Fahrzeugs anzubringen. Das Anschlagelement kann aber auch abnehmbar vorgesehen sein, so daß beispielsweise für bestimmte Einsatzgebiete wie zu Wartungs- oder Reinigungszwecken die Halteeinrichtung in eine abweichende Stellung bringbar ist. Dies ist besonders wünschenswert, wenn an der Halteeinrichtung Mäheinheiten, beispielsweise · in der Art von Spindelmäheinheiten, angebracht sind, die zur Wartung und zur Einstellung eines Untermessers durch den Tragarm vorzugsweise in eine stark angehobene Stellung gebracht werden, so daß die Unterseite der Mäheinheiten zugänglich wird.

Es ist vorteilhaft, den Tragarm an dem Rahmen in vertikaler Richtung mittels eines Betätigungsmittels verstellbar anzubringen, so daß der Tragarm und damit die Halteeinrichtung und eventuell auch zumindest eines der Anschlagelemente in unterschiedliche Vertikalstellungen gebracht und die Halteeinrichtung beispielsweise in einer erhöhten oder abgesenkten Stellung gesichert werden kann. Das Betätigungsmittel ist vorzugsweise als ein Hydraulikmotor ausgeführt, der beispielsweise durch eine bereits am Fahrzeug für andere Zwecke, wie den Antrieb einer Arbeitseinheit, vorgesehene Druckquelle oder durch eine eigene Druckquelle mit Druck beaufschlagbar ist. Es ist aber auch eine Verstellung mittels eines anderen Motors, beispielsweise eines Elektromotors, denkbar. Auch die Kraftübertragung mittels eines Getriebes, wie eines Riemengetriebes etc. ist möglich. Darüber hinaus kann auch eine manuelle Verstellung beispielsweise mittels eines Kurbelantriebs vorgesehen sein, vorzugsweise dann, wenn keine andere Energiequelle zur Verfügung steht.

Eine sichere Stabilisierung der Halteeinrichtung kann erzielt werden, wenn zumindest eines der Anschlagelemente einen zumindest annähernd V-förmigen Oberflächenbereich aufweist. Durch die Seitenflächen des Oberflächenbereichs wird die Halteeinrichtung in Richtung des tiefsten bzw. höchsten Punktes, vorzugsweise des Scheitelpunkts des V-förmigen Oberflächenbereichs, geführt, wodurch sie gegen ein seitliches Verschieben gesichert wird.

Vorzugsweise ist zumindest eines der Anschlagelemente der Gelenkverbindung seitwärts benachbart angeordnet. Es ist aber auch denkbar, die Anschlagelemente in unmittelbarer Nähe der Gelenkverbindung vorzusehen, oder die Anschlagelemente in größerem Abstand zu der Gelenkverbindung anzuordnen, um andere Hebelverhältnisse zu erhalten.

Solche Tragvorrichtungen können an Grundstückspflegefahrzeugen vorgesehen sein. Grundstückspflegefahrzeuge sind beispielsweise Fahrzeuge und Geräte zur Rasen- und Sportplatzpflege oder aber Fahrzeuge wie Kehrmaschinen, Schneeräumgeräte oder andere Fahrzeuge und Geräte, die hauptsächlich zu Instandsetzungs- und Wartungsarbeiten auf privaten, öffentlichen, industriell oder anderweitig genutzten Grundstücken eingesetzt werden.

Wird die Halteeinrichtung mit einer Arbeitseinheit wie einer Kehrwalze, einem Räumschild oder einer Schneideinrichtung etc. verbunden, so kann diese in einer Arbeits- oder einer AußerBetriebsstellung, wie beispielsweise einer Transportstellung, stabilisiert werden. Vorzugsweise ist die Arbeitseinheit als Schneideinheit eines Mähgeräts ausgeführt. Durch die Stabilisierung der Schneideinheit kann, besonders bei einer Festlegung in einer erhöhten Transportstellung, Beschädigungen des Rasens oder der Schneideinheit durch ein Auftreffen der Schneideinheit auf den Untergrund während des Transports, beispielsweise in Kurven oder während Kehrtwendungen, vorgebeugt werden.

In der Zeichnung ist ein nachfolgend näher beschriebenes Ausführungsbeispiel der Erfindung dargestellt. Es zeigt:
- Fig. 1: eine schematische Draufsicht auf ein Fahrzeug mit zwei vorderen und einer rückwärtigen Schneideinheit,
- Fig. 2: eine Ausschnittsansicht der vorderen bezogen auf die Fahrtrichtung des Fahrzeugs rechten Schneideinheit mit einer erfindungsgemäßen Tragvorrichtung,
- Fig. 3: eine perspektivische Darstellung der bezogen auf die Fahrtrichtung linken, vorderen Schneideinheit,
- Fig. 4: eine Seitenansicht der rechten, vorderen Schneideinheit in der Betriebsstellung,

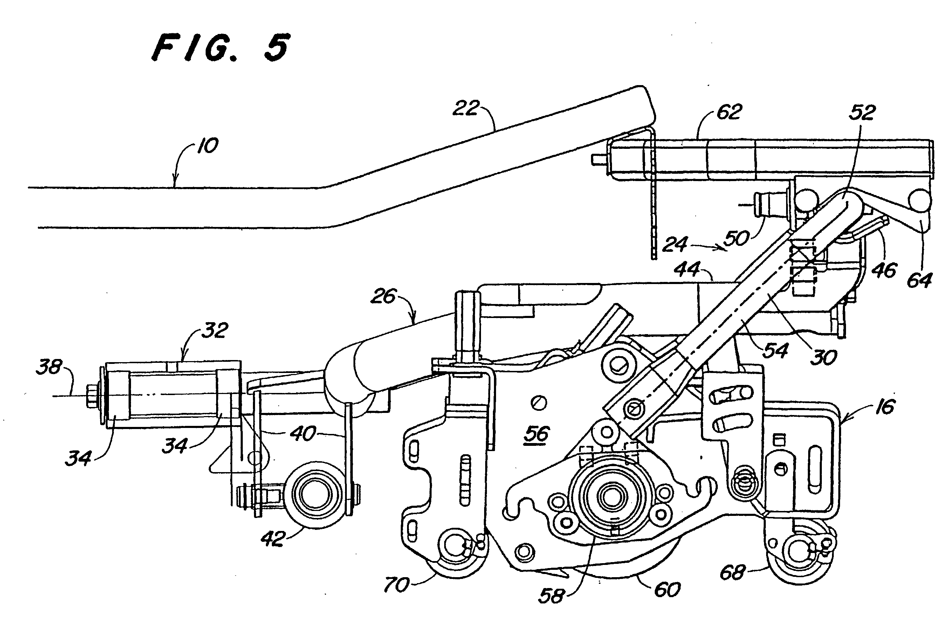

- Fig. 5: eine Seitenansicht der rechten vorderen Schneideinheit in der Transportstellung und
- Fig. 6: eine perspektivische Seitenansicht von der bezogen auf die Fahrtrichtung linken Seite des Fahrzeugs auf die rückwärtige Schneideinheit mit einer erfindungsgemäßen Tragvorrichtung.

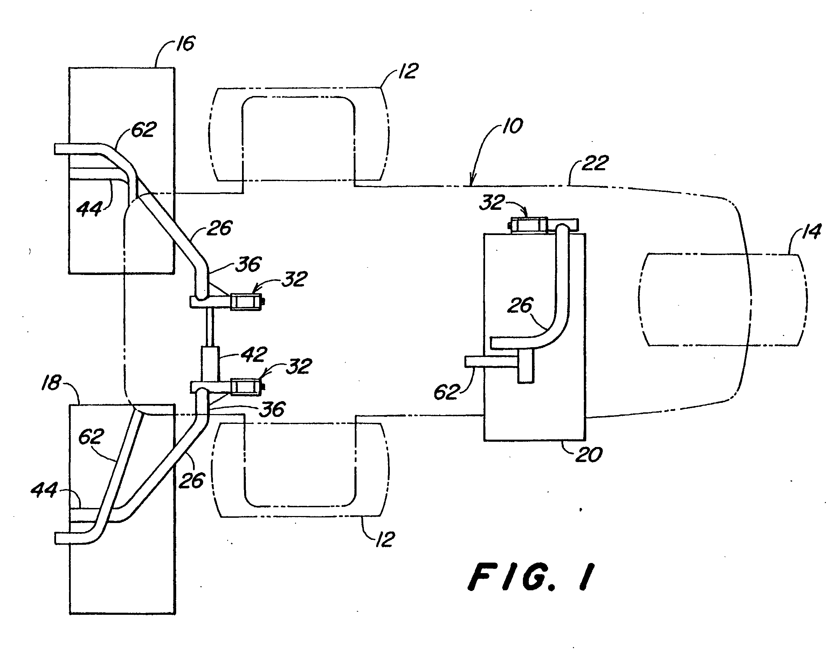

Mit Bezug auf Figur 1 wird eine schematische Ansicht eines als Grundstückspflegefahrzeug, insbesondere als Mähgerät, ausgeführten Fahrzeugs 10 gezeigt, an das die vorliegende Erfindung zur Benutzung angepaßt ist. Das angetriebene Fahrzeug 10 weist ein Paar den Boden berührender Vorderräder 12 und ein einzelnes Hinterrad 14 auf. Ein Paar vorderer Spindelmäherschneideinheiten bzw. Schneideinheiten 16 und 18 ist an der Vorderseite des Fahrzeugs 10 angebracht und eine rückwärtige Spindelmäherschneideinheit bzw. Schneideinheit 20 ist unterhalb des Fahrzeugs 10 zwischen den Vorderrädern 12 und dem rückwärtigen Rad 14 angebracht. Jede Schneideinheit 16, 18 und 20 ist mit einem Rahmen 22 des Fahrzeugs 10 über ein Gestänge 24 entsprechend der vorliegenden Erfindung verbunden, das einen Tragarm 26, eine Gelenkverbindung 28 und eine als Joch ausgeführte Halteeinrichtung 30 aufweist, wie es im folgenden genauer beschrieben wird.

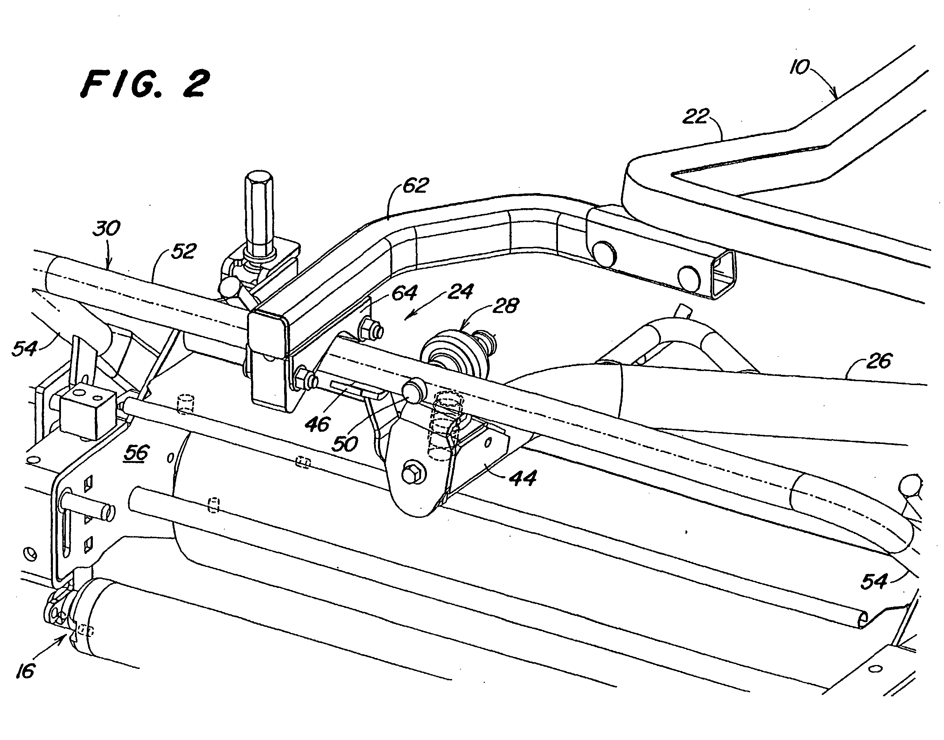

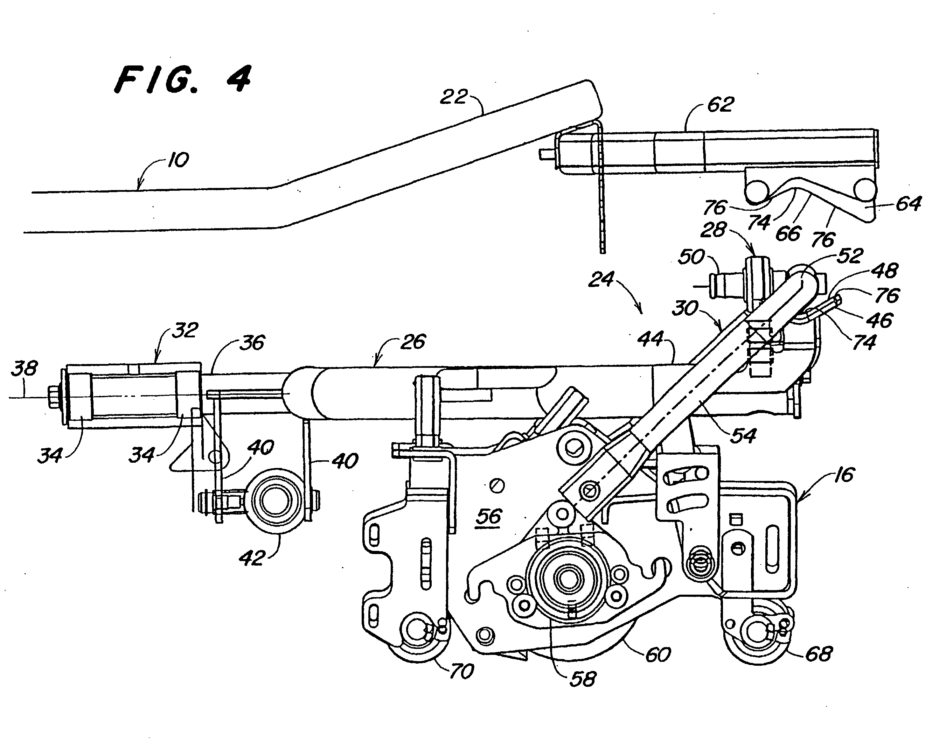

Mit Bezug auf die Figuren 2 und 4 wird eine rechte vordere Schneideinheit 16 und ein Gestänge 24 gezeigt, das im Detail beschrieben wird. Mit dem Rahmen 22 ist ein Schwenkmechanismus 32 verbunden, der ein Paar von Lagern 34 aufweist, welche den rückwärtigen Endbereich 36 des Tragarms 26 schwenkbar aufnehmen. Die Lager 34 bestimmen eine Achse 38, die sich bezogen auf das Mähgerät 10 in Längsrichtung erstreckt. Der Tragarm 26 ist um diese Achse 38 verschwenkbar. Ein Paar von Fingern 40 erstreckt sich von dem Tragarm 26 nach unten. Ein als Hydraulikmotor ausgeführtes Betätigungsmittel 42 ist zwischen dem Rahmen 22 und den Fingern 40 angeordnet. Eine Bedienungsperson kann das Betätigungsmittel 42 aus- und einfahren, wodurch die Finger 40 um die Achse 38 des Verschwenkmechanismus 32 verschwenkt werden und dadurch verursachen, daß der Tragarm 26 um die Achse 38, die durch die Lager 34 bestimmt wird, verschwenkt. Der Tragarm 26 erstreckt sich nach vorne und seitlich von einer Mittellinie des Fahrzeugs 10 aus. An dem vorderen Endbereich 44 des Tragarms 26 ist ein Universalgelenk bzw. eine Gelenkverbindung 28 befestigt. Ein erstes oder unteres Anschlagelement 46, das einen V-förmigen Oberflächenbereich 48 aufweist, ist ebenfalls steif an dem vorderen Endbereich 44 des Tragarms 26 befestigt. Ein Stift 50, der sich durch die Gelenkverbindung 28 erstreckt, ist mit der Halteeinrichtung 30 verbunden. Die Halteeinrichtung 30 weist einen sich seitwärts erstreckenden Zentralbereich 52 und ein Paar von sich nach unten und rückwärts erstreckenden Schenkeln 54 auf. Die unteren Endbereiche der Schenkel 54 sind schwenkbar mit den Seiten des Rahmens 56 der Schneideinheit 16 verbunden. An dem rechten Seitenbereich des Rahmens 56 ist ein Hydraulikantrieb 58 angebracht, der seine hydraulische Energie von dem Hydrauliksystem des Fahrzeugs 10 erhält. Der Hydraulikantrieb 58 überträgt Rotationsenergie in üblicher Weise auf eine zylindrische Mähspindel 60, die in dem Rahmen 56 der Mähspindel 16 angeordnet ist. Gegengewichte sind an der dem Hydraulikantrieb 58 gegenüberliegenden Seite des Rahmens 56 angebracht, um die Schneideinheit 16 von Seite zu Seite auszubalancieren. Ein Stützmittel 62 ist fest mit dem Rahmen 22 des Fahrzeugs 10 verbunden und erstreckt sich von diesem aus nach vorne. Ein zweites oder oberes Anschlagelement 64 ist fest mit dem Stützmittel 62 verbunden und weist einen V-förmigen Oberflächenbereich 66 auf, der an die Halteeinrichtung 30, wie es im folgenden genauer beschrieben wird, anlegbar ist.

Als nächstes wird die Arbeitsweise der vorliegenden Erfindung anhand der rechten vorderen Schneideinheit 16 genauer beschrieben werden. Während des normalen Mähbetriebs befindet sich die rechte vordere Schneideinheit 16 in der in Fig. 4 gezeigten Stellung. In diesem Betriebszustand ist das Betätigungsmittel 42 im allgemeinen von dem Hydraulikdruck entlastet, und dem Tragarm 26 ist es daher erlaubt, unter dem Gewicht der Schneideinheit 16, die an den vorderen Endbereich 44 des Tragarms 26 angeschlossen ist, nach unten zu schwenken. Vordere und rückwärtige Rollen 68 und 70, die an der Schneideinheit 16 angebracht sind, rollen in Kontakt mit dem Boden, um die Schneideinheit 16 in der gewünschten Höhe über dem Boden zu stützen, um dabei der Mähspindel 60 und einem Untermesser zu erlauben, Gras in der gewünschten Höhe zu schneiden. Die Schneideinheit 16 wird durch die Halteeinrichtung 30 vorwärts gezogen, und die Halteeinrichtung 30 wird im allgemeinen durch den mit dem Fahrzeug 10 verbundenen Tragarm 26 nach vorne geschoben oder gedrückt. Wenn Bodenwellen auftreten, ist es der Schneideinheit 16 möglich, über diese Bodenwellen in unmittelbarer Nähe zu der Bodenoberfläche zu fahren. Die Schwenkvorrichtung 28, die schwenkbare Verbindung der Halteeinrichtung 30 mit der Schneideinheit 16, und der Verschwenkmechanismus 32 des Tragarms 26 am Rahmen 22 erlauben es der Schneideinheit 16, den Bodenwellen in der Bodenkontur eng zu folgen.

Die Bedienungsperson kann die Schneideinheit 16 in eine Transportstellung anheben, sowenn sie einen Mähstreifen fertiggestellt hat und eine Kehrtwendung ausführen möchte, bevor sie einen angrenzenden Streifen in der entgegengesetzten Richtung ausführt. Um die Schneideinheit 16 vom Boden in ihre Transportstellung anzuheben, verlängert die Bedienungsperson das Betätigungsmittel 42, was den Tragarm 26 dazu zwingt, um seinen Verschwenkmechanismus 32 zur Verbindung mit dem Rahmen 22 nach oben zu verschwenken. Wenn der Tragarm 26 nach oben verschwenkt, verschiebt sich der vordere Endbereich 44 des Tragarms 26 nach oben und das untere Anschlagelement 46 verschiebt sich mit nach oben. Wenn sich der vordere Endbereich 44 des Tragarms 26 nach oben verschiebt, wird sich die Halteeinrichtung 30 ebenfalls nach oben verschieben und die Schneideinheit 16 vom Boden heben. Die Schneideinheit 16 wird dann dazu neigen, nach unten und nach vorne zu schwenken, wenn sie vom Boden abgehoben ist, aber eine Kette 72, die sich zwischen der Schneideinheit 16 und dem Tragarm 26 erstreckt, begrenzt die Bewegung der Schneideinheit 16 in dieser Richtung. Wenn die Schneideinheit 16 vom Boden abgehoben ist, steht es der Schneideinheit 16 und der Halteeinrichtung 30 frei, leicht von Seite zu Seite um eine sich nach vorne erstreckende Achse, die durch die Gelenkverbindung 28 bestimmt wird, zu verschwenken. Wenn die Bedienungsperson die Schneideinheit 16 anhebt, kann die Halteeinrichtung 30 in Anlage an den V-förmigen Oberflächenbereich 48 des unteren Anschlagelements 46 verschwenken. Die Halteeinrichtung 30 und die Schneideinheit 16 sind dadurch gegen ein Verschwenken in einer Richtung durch Anlage der Halteeinrichtung 30 an dem unteren Anschlagelement 46 blockiert. Die Bedienungsperson fährt fort, die Schneideinheit 16 anzuheben, bis die obere Oberfläche der Halteeinrichtung 30 an dem V-förmigen Oberflächenbereich 66 des oberen Anschlagelements 64 anliegt. Das Gestänge 24 wird dann allgemein an einem weiteren Verschieben nach oben gehindert.

Die durch das untere und das obere Anschlagelement 46 und 64 bestimmten V-förmigen Oberflächenbereiche 48 und 66 helfen dabei, die Halteeinrichtung 30 in eine durch die V-förmigen Oberflächenbereiche 48 und 66 bestimmte Kerbe 74 zu führen und zu zentrieren. Wenn die Halteeinrichtung 30 und die Schneideinheit 16 angehoben sind, wenn die Halteeinrichtung 30 an einem flachen Bereich 76 des Anschlagelements 46 und 64 anliegt, wird die Halteeinrichtung 30 entlang der flachen Oberfläche 76 in die tiefste Stellung des Tals oder der Kerbe 74, die durch die V-förmigen Oberflächenbereiche 48 und 66 bestimmt wird, gleiten. Die V-förmigen Oberflächenbereiche 48 und 66 helfen auch dabei, die Halteeinrichtung 30 fest und sicher in einer einzelnen Stellung in der tiefsten Stelle oder Kerbe 74 der V-förmigen Oberflächenbereiche 48 und 66 zu halten, sobald die Schneideinheit 16 vollständig in ihre Transportstellung angehoben ist.

Mit dem Tragarm 26 in der angehobenen Stellung und der Halteeinrichtung 30 in Anlage an dem unteren und dem oberen Anschlagelement 66 und 46, werden die Halteeinrichtung 30 und die Schneideinheit 16 im allgemeinen von einem Verschwenken von Seite zu Seite um die Gelenkverbindung 28 abgehalten. Die Gelenkverbindung 28 und das obere und das untere Anschlagelement 64 und 46 bestimmen drei Punkte, an welchen die Bewegung der Halteeinrichtung 30 begrenzt wird. Diese drei Punkte dienen zusammen mit den V-förmigen Oberflächenbereichen 48 und 66 der Anschlagelemente 46 und 64 dazu, die Halteeinrichtung 30 allgemein an einem Verschwenken um die Gelenkverbindung 28 zu hindern. Die Halteeinrichtung 30 und die Schneideinheit 16 werden dabei von einem Verschwenken von Seite zu Seite abgehalten, wenn die Bedienungsperson die Schneideinheit 16 in die Transportstellung anhebt. Wenn die Bedienungsperson mit der Schneideinheit 16 in der angehobenen Stellung eine Wendung ausführt, hält oder fängt die vorliegende Erfindung die Halteeinrichtung 30 allgemein in ihrer Stellung, was die Schneideinheit 16 allgemein davon abhält, aufgrund während der Wendung auftretender Zentrifugalkraft nach unten in Kontakt mit dem Boden zu verschwenken. Alle Schneideinheiten 16, 18 und 20 werden auf einer einheitlichen Höhe gehalten und die Schneideinheiten 16, 18, 20 werden allgemein davon abgehalten, in Kontakt mit Seitenböschungen zu verschwenken, während sie in der Transportstellung gehalten werden. Die Schneideinheiten 16, 18 und 20 und die Halteeinrichtungen 30 werden auch an einem Hochschwenken in Kontakt mit der Unterseite des Fahrzeugs 10 gehindert, wenn die Schneideinheiten 16, 18 und 20 in der Transportstellung gehalten werden.

Wenn die Bedienungsperson es wünscht, die Schneideinheit 16 auf den Boden zurückzubringen, um den normalen Mähbetrieb wieder aufzunehmen, wird die Bedienungsperson die Steuerung bedienen, um dem Hydraulikdruck zu erlauben, von dem Betätigungsmittel 42 entlastet zu werden. Das Gewicht der Schneideinheit 16 wird den Tragarm 26 nach unten verschwenken und das Hydraulikmedium aus dem Betätigungsmittel 42 zwingen, bis die Rollen 68 und 70 auf der Bodenoberfläche zur Auflage kommen. Das untere Anschlagelement 46 stützt die Halteeinrichtung 30, wenn die Schneideinheit 16 sich zu senken beginnt, und hindert die Halteeinrichtung 30 allgemein daran, während des Absenkvorgangs stark in eine Richtung zu verschwenken. Die Schneideinheit 16 wird daher annähernd horizontal ausgerichtet sein, so daß die äußeren Kanten der Schneideinheit 16 die Rasenoberfläche nicht stark aushöhlen oder beschädigen, wenn die Schneideinheit 16 den Boden berührt.

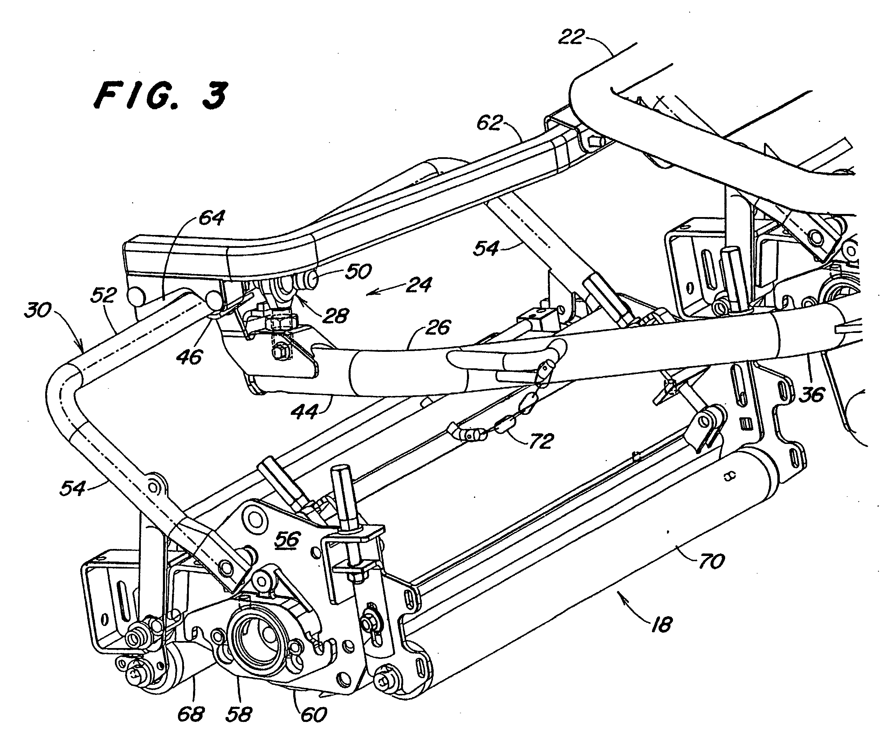

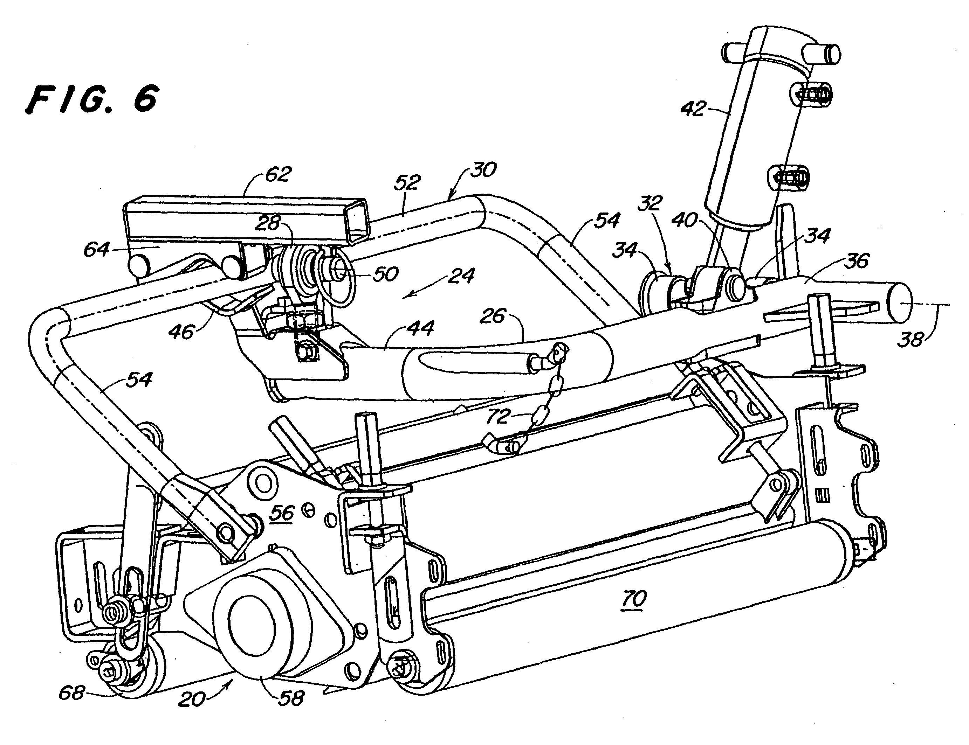

Nur die rechte vordere Schneideinheit 16 und das zugehörige Gestänge 24 sind vorstehend im Detail beschrieben. Entsprechende Gestänge 24 sind mit der linken vorderen Schneideinheit 18 und der rückwärtigen Schneideinheit 20 des Fahrzeugs 10 verbunden. Die linke vordere Schneideinheit 18 und die rückwärtige Schneideinheit 20 sowie entsprechende Gestänge 24 werden in den Figuren 3 und 6 gezeigt.

## Patentansprüche

1. Tragvorrichtung mit einem Tragarm (26), einer Halteeinrichtung (30) und einer Gelenkverbindung (28), wobei der Tragarm (26) einenends mit einem Fahrzeug (10) und andernends über die Gelenkverbindung (28) mit der Halteeinrichtung (30) schwenkbar verbindbar ist, und mit zumindest einem ersten Anschlagelement (46, 64) zur Lagesicherung der Halteeinrichtung (30), wobei das Anschlagelement (46, 64) und die Halteeinrichtung (30) durch eine Verstellung des Tragarms (26) aneinander anlegbar sind, **gekennzeichnet durch** zumindest ein zweites Anschlagelement (64), wobei die Halteeinrichtung (30) zwischen dem ersten Anschlagelement (46) und dem zweiten Anschlagelement (64) angeordnet ist.

2. Tragvorrichtung nach Anspruch 1, **dadurch gekennzeichnet, daß** das erste Anschlagelement (46) unterhalb der Halteeinrichtung (30) angeordnet ist.

3. Tragvorrichtung nach Anspruch 1 oder 2, **dadurch gekennzeichnet, daß** das zweite Anschlagelement (64) bezogen auf die Halteeinrichtung (30) seitlich versetzt angeordnet ist.

4. Tragvorrichtung nach einem oder mehreren der vorherigen Ansprüche, **dadurch gekennzeichnet, daß** wenigstens eines der Anschlagelemente (46, 64) mit dem Tragarm (26) mitteloder unmittelbar verbunden ist.

5. Tragvorrichtung nach einem oder mehreren der vorherigen Ansprüche, **dadurch gekennzeichnet, daß** zumindest eines der Anschlagelemente (46, 64) mit einem Rahmen (22) des Fahrzeugs (10) mittel- oder unmittelbar verbunden ist.

6. Tragvorrichtung nach einem oder mehreren der vorherigen Ansprüche, **dadurch gekennzeichnet, daß** der Tragarm (26) mittels eines vorzugsweise als Hydraulikmotor ausgeführten Betätigungsmittels (42) in vertikaler Richtung verstellbar an dem Rahmen (22) angebracht ist.

7. Tragvorrichtung nach einem oder mehreren der vorherigen Ansprüche, **dadurch gekennzeichnet, daß** zumindest eines der Anschlagelemente (46, 64) einen zumindest annähernd V-förmigen Oberflächenbereich (48, 66) zur Aufnahme der Halteeinrichtung (30) aufweist.

8. Tragvorrichtung nach einem oder mehreren der vorherigen Ansprüche, **dadurch gekennzeichnet, daß** zumindest eines der Anschlagelemente (46, 64) der Gelenkverbindung (28) seitwärts benachbart angeordnet ist.

9. Grundstückspflegefahrzeug mit einer Tragvorrichtung nach einem oder mehreren der vorherigen Ansprüche.

10. Grundstückspflegefahrzeug nach Anspruch 9, **dadurch gekennzeichnet, daß** die Halteeinrichtung mit einer Arbeitseinheit vorzugsweise mit einer Schneideinheit (16, 18, 20) eines Mähgeräts verbindbar ist.

## Claims

1. A support device with a support arm (26), a carrying device (30) and a pivotal connection (28), wherein the support arm (26) can be connected pivotally at one end to a vehicle (10) and at the other end to the carrying device (30) through the pivotal connection (28), and with at least one first stop element (46, 64) for securing the position of the carrying device (30), wherein the stop element (46, 64) and the carrying device (30) can be applied to one another by an adjustment of the support arm (26), **characterized by** at least one second stop element (64), wherein the carrying device (30) is disposed between the first stop element (46) and the second stop element (64).

2. A support device according to claim 1, **characterized in that** the first stop element (46) is disposed below the carrying device (30).

3. A support device according to claim 1 or 2, **characterized in that** the second stop element (64) is offset to the side relative to the carrying device (30).

4. A support device according to one or more of the preceding claims, **characterized in that** at least one of the stop elements (46, 64) is connected indirectly or directly to the support arm (26).

5. A support device according to one or more of the preceding claims, **characterized in that** at least one of the stop elements (46, 64) is connected indirectly or directly to a frame (22) of the vehicle (10).

6. A support device according to one or more of the preceding claims, **characterized in that** the support arm (26) is fitted on the frame (22) so that it can be adjusted in the vertical direction by means of an actuating means (42) preferably implemented as a hydraulic motor.

7. A support device according to one or more of the preceding claims, **characterized in that** at least one of the stop elements (46, 64) comprises an at least approximately V-shaped surface region (48, 66) for reception of the carrying device (30).

8. A support device according to one or more of the preceding claims, **characterized in that** at least one of the stop elements (46, 64) is arranged laterally adjacent the pivotal connection (28).

9. A plot care vehicle with a support device according to one or more of the preceding claims.

10. A plot care vehicle according to claim 9, **characterized in that** the carrying device (30) can be connected to a working unit, preferably to a cutter unit (16, 18, 20) of a mower.

## Revendications

1. Dispositif de support comprenant un bras de support (26), un dispositif de retenue (30) et une liaison articulée (28), le bras de support (26) pouvant être relié de manière à pouvoir pivoter par une extrémité à un véhicule (10) et par l'aut extrémité au dispositif de retenue (30) par l'intermédiaire de la liaison articulée (28), et comportant au moins un premier dispositif de butée (46, 64), pour le blocage en position du dispositif de retenue (30), l'élément de butée (46, 64) et le dispositif de retenue (30) pouvant être appliqués l'un contre l'autre au moyen d'un déplacement du bras de support (26), **caractérisé par** au moins un second élément de butée (64), le dispositif de retenue (30) étant disposé entre le premier élément de butée (46) et le second élément de butée (64).

2. Dispositif de support selon la revendication 1, **caractérisé en ce que** le premier élément de butée (46) est disposé au-dessous du dispositif de retenue (30).

3. Dispositif de support selon la revendication 1 ou 2, **caractérisé en ce que** le second élément de butée (64) est disposé en étant décalé latéralement par rapport au dispositif de retenue (30).

4. Dispositif de support selon une ou plusieurs des revendications précédentes, **caractérisé en ce qu'**au moins l'un des éléments de butée (46, 64) est relié indirectement ou directement au bras de support (26).

5. Dispositif de support selon une ou plusieurs des revendications précédentes, **caractérisé en ce qu'**au moins l'un des éléments de butée (46, 64) est relié indirectement ou directement à un châssis (22) du véhicule (10).

6. Dispositif de support selon une ou plusieurs des revendications précédentes, **caractérisé en ce que** le bras de support (26) est monté sur le châssis (22) de manière à être réglable dans la direction verticale à l'aide d'un moyen d'actionnement (42) agencé de préférence sous la forme d'un moteur hydraulique.

7. Dispositif de support selon une ou plusieurs des revendications précédentes, **caractérisé en ce qu'**au moins l'un desdits éléments de butée (46, 64) possède un élément de surface (48, 66) au moins approximativement en forme de V et servant à recevoir le dispositif de retenue (30).

8. Dispositif de support selon une ou plusieurs des revendications précédentes, **caractérisé en ce qu'**au moins l'un des éléments de butée (46, 64) est disposé latéralement au voisinage de la liaison articulée (28).

9. Véhicule de traitement du sol comportant un dispositif de support selon une ou plusieurs des revendications précédentes.

10. Véhicule de traitement du sol selon la revendication 9, **caractérisé en ce que** le dispositif de retenue peut être relié à une unité de travail, de préférence à une unité de coupe (16, 18, 20).
